(19) Europäisches Patentamt
European Patent Office
Office européen des brevets

(11) **EP 2 889 642 B1**

(12) **EUROPÄISCHE PATENTSCHRIFT**

(45) Veröffentlichungstag und Bekanntmachung des Hinweises auf die Patenterteilung:
**08.03.2017   Patentblatt 2017/10**

(51) Int Cl.:
*G01S 17/10* *(2006.01)*     *G01S 17/42* *(2006.01)*
*G01S 13/20* *(2006.01)*     *G01S 13/22* *(2006.01)*

(21) Anmeldenummer: **14192640.2**

(22) Anmeldetag: **11.11.2014**

(54) **Verfahren zur Entfernungsmessung**

Method for distance measurement

Procédé de télémétrie

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.12.2013   AT 508282013**

(43) Veröffentlichungstag der Anmeldung:
**01.07.2015   Patentblatt 2015/27**

(73) Patentinhaber: **Riegl Laser Measurement Systems GmbH**
**3580 Horn (AT)**

(72) Erfinder:
• **Ullrich, Andreas**
  **3003 Gablitz (AT)**
• **Rieger, Peter**
  **3824 Grossau (AT)**

(74) Vertreter: **Weiser, Andreas**
**Patentanwalt**
**Kopfgasse 7**
**1130 Wien (AT)**

(56) Entgegenhaltungen:
WO-A1-2012/135874     DE-A1-102005 033 403
US-B1- 7 345 743

EP 2 889 642 B1

**Beschreibung**

Die vorliegende Erfindung betrifft ein Verfahren zur Entfernungsmessung von Umgebungszielen durch Laufzeitmessung von an diesen Umgebungszielen reflektierten Impulsen. Die Impulse können beliebiger Art sein, z.B. Lichtimpulse, insbesondere Laserimpulse, Funkimpulse, insbesondere Radarimpulse, Schallimpulse od. dgl. Die Erfindung betrifft ferner ein Verfahren zum Laserscannen durch Richten von Laserimpulsen fortlaufend auf verschiedene Umgebungsziele.

Moderne Impulslaufzeit-Entfernungsmesser wie Laserentfernungsmesser bzw. -scanner arbeiten mit hoher Impulsleistung über große Entfernungen und/oder hoher Impulswiederholungsrate zur raschen Erstellung einer Vielzahl von Entfernungsmesspunkten der Umgebung. In beiden Fällen kann sich die Situation ergeben, dass der nächste Impuls schon ausgesandt wird, noch bevor die Reflexion des letzten Impulses empfangen wurde, sodass die eintreffenden Empfangsimpulse nicht mehr eindeutig ihrem jeweiligen Sendeimpuls zugeordnet werden können. Dies ist als "multiple time around"- (MTA) bzw. "multiple pulses in the air"-Problem bekannt. Die maximale Größe $d_{max}$ des eindeutig vermessbaren Entfernungsbereiches, der sog. MTA-Zone, ergibt sich dabei aus der Impulswiederholungsrate (pulse repetition rate) PRR und der Lichtgeschwindigkeit c zu

$$d_{max} \;=\; c \,/\, (2 \cdot PRR) \,.$$

Laserscanner moderner Bauart bieten beispielsweise Impulswiederholungsraten von bis zu 400 kHz, was einer MTA-Zonengröße $d_{max}$ von etwa 375 m entspricht. Wird diese Messdistanz überschritten, ist das Messergebnis aufgrund der nicht eindeutigen Zuordenbarkeit der Sende- und Empfangsimpulse in der Regel nicht korrekt interpretierbar.

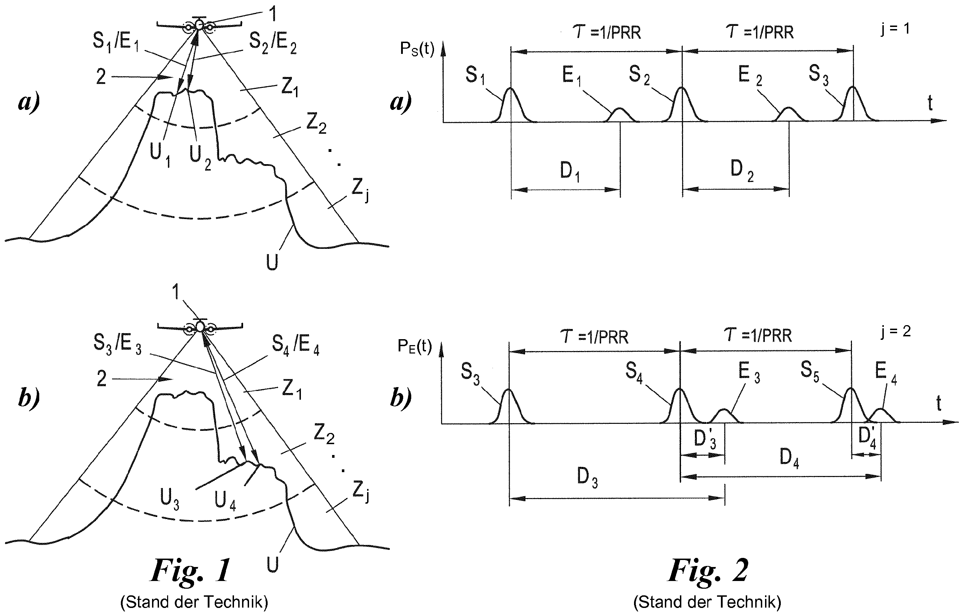

Die Fig. 1 und 2 zeigen diese Situation im Detail. Von einem flugzeuggestützten Laserscanner 1 wird ein gepulster Lasermessstrahl 2 abtastend über eine Umgebung U mit einzelnen Umgebungszielen (Abtastpunkten) $U_1$, $U_2$,... geführt, z.B. zeilenweise fächerförmig. Aus Laufzeitmessungen an den einzelnen ausgesandten Impulsen $S_1$, $S_2$,..., die nach der Umgebungsreflexion als Empfangsimpulse $E_1$, $E_2$,... zurückerhalten werden, können die Zielentfernungen $D_1$, $D_2$,... zu den einzelnen Umgebungszielen $U_1$, $U_2$,... bestimmt werden.

Die Fig. 1a und 2a zeigen eine beispielhafte Situation bei der Vermessung von Umgebungszielen $U_1$, $U_2$, die in der ersten, dem Laserscanner 1 nächstgelegenen MTA-Zone $Z_1$ liegen: Der zum Sendeimpuls $S_1$ gehörende Empfangsimpuls $E_1$ wird zurückerhalten, bevor der nächste Sendeimpuls $S_2$ im Zeitabstand $\tau = 1/PRR$ ausgesandt wird, usw. usf.

Die Fig. 1b und 2b zeigen eine beispielhafte Situation, wenn Umgebungsziele $U_3$, $U_4$ in der zweiten MTA-Zone $Z_2$ liegen: Hier wird der zum Sendeimpuls $S_3$ gehörende Empfangsimpuls $E_3$ erst empfangen, nachdem bereits der nächste Sendeimpuls $S_2$ ausgesandt wurde. Zur Bestimmung der korrekten Entfernung $D_3$ des Umgebungsziels $U_3$ in der Zone $Z_2$ ist es notwendig, den Empfangsimpuls $E_3$ korrekt dem Sendeimpuls $S_3$ zuzuordnen; wird der Empfangsimpuls $E_3$ fälschlich dem unmittelbar vorhergehenden Sendeimpuls $S_4$ zugeordnet, ergibt sich eine falsche Zielentfernung $D_3'$ in der falschen MTA-Zone $Z_1$, anstelle der richtigen Zielentfernung $D_3$ in der richtigen MTA-Zone $Z_2$.

Zur richtigen gegenseitigen Zuordnung der Sende- und Empfangsimpulse und damit Überwindung der MTA-Zonengrenzen für eindeutige Entfernungsmessungsergebnisse sind verschiedenste Verfahren bekannt. Eine erste Möglichkeit besteht darin, bei der Planung der Vermessungsaufgabe darauf zu achten, dass alle zu erwartenden Umgebungsziele in ein- und derselben MTA-Zone liegen, um die korrekte Zuordnung vornehmen zu können. Dieses Verfahren ist naturgemäß nur für spezielle Messaufgaben anwendbar und z.B. für hochmobile oder weiträumige Vermessungs- oder Scanaufgaben, z.B. das luftgestützte Scannen von Gebirgen oder das terrestrische fahrzeuggestützte Scannen, ungeeignet.

Eine andere Gruppe von Verfahren beruht darauf, die einzelnen Sendeimpulse durch Variation bzw. Codierung ihrer Polarisation, Amplitude oder Wellenlänge voneinander unterscheidbar zu machen, um die Empfangsimpulse entsprechend zuordnen zu können. Diese Verfahren sind jedoch entweder nur für wenige "pulses in the air" geeignet oder erfordern aufwändig codierte Impulse, was jeweils die Impulswiederholungsrate und den vermessbaren Entfernungsbereich begrenzt und die Messzeit verlängert.

Die Erfindung setzt sich zum Ziel, ein Verfahren zum Entfernungsmessen bzw. Scannen zu schaffen, welches eine automatische Zuordnung und damit richtige Vermessung von Umgebungszielen in beliebigen MTA-Zonen mit hoher Impulswiederholungsrate ermöglicht. Dieses Ziel wird mit einem Verfahren der einleitend genannten Art erreicht, welches umfasst:

Aussenden einer Folge von Impulsen, in welcher die Impulsabstände zumindest einer Gruppe aufeinanderfolgender Impulse einem bekannten Abstandsmuster folgen, als Sendeimpulsfolge und begleitendes Empfangen der reflektierten Impulse als Folge von Empfangsimpulsen und Messen deren Impulsabstände,

Ermitteln, in der Empfangsimpulsfolge, einer Gruppe von Empfangsimpulsen, deren Impulsabstände die größte Ähnlichkeit mit dem bekannten Abstandsmuster haben,

Bestimmen von Laufzeiten zwischen jedem Sendeimpuls der genannten Sendeimpulsgruppe und jeweils jenem Empfangsimpuls der genannten Empfangsimpulsgruppe, welcher darin dieselbe Reihung in der Gruppe hat wie dieser Sendeimpuls in seiner Gruppe, und

Bestimmen von Entfernungsmesswerten aus den genannten Laufzeiten.

Es sei erwähnt, dass das Variieren des Impulsabstandes und damit der Impulswiederholungsrate (Reziprokwert des Impulsabstandes) als sog. "PRR-Modulation" auf dem Gebiet der Radartechnik an sich bekannt ist, um "Geisterechos" ("ghosting") von Sendeimpulsen außerhalb der richtigen MTA-Zone zu identifizieren.

Die vorliegende Erfindung verwendet eine neuartige "Zeitabstands"-Betrachtung einer PRR-modulierten Sendeimpulsfolge, wobei die variierenden Impulsabstände in einer Impulsgruppe der Folge ein eindeutiges Abstandsmuster bilden, das in der Empfangsimpulsfolge als Impulsgruppe wiedererkannt werden kann. Dadurch kann eine MTA-zonenrichtige Zuordnung der Empfangsimpulse in dieser Gruppe zu den Sendeimpulsen der ursächlichen Sendeimpulsgruppe vorgenommen werden, woraufhin zwischen diesen MTA-zonenrichtig zugeordneten Sende- und Empfangsimpulsen jeweils genaue, individuelle Laufzeiten berechnet werden können. Im Ergebnis können hochgenaue Entfernungsmesswerte unter automatischer MTA-Zonenzuordnung mit der vollständigen Zeitauflösung der Sendeimpulse der Sendeimpulsfolge erzielt werden.

Die Erfindung beruht dabei einerseits auf der Erkenntnis, dass die "Oberflächenrauigkeit" der zu vermessenden Umgebung innerhalb einer Sendeimpulsgruppe für die MTA-Zonenzuordnung gering ist, d.h. das Abstandsmuster der Sendeimpulsgruppe durch die Umgebungsreflexion der einzelnen Impulse der Gruppe nur geringfügig verzerrt wird, so dass ein Wiedererkennen des Abstandsmusters in der Empfangsimpulsfolge mit Hilfe einer Musterähnlichkeitssuche möglich ist; andererseits können dann, wenn die richtige Empfangsimpulsgruppe der Sendeimpulsgruppe zugeordnet wurde, exakte Laufzeiten zwischen den einzelnen Sende- und Empfangsimpulsen der Gruppen berechnet werden, was eine ganz genaue Vermessung dieser Oberflächenrauigkeit mittels einzelner Entfernungsmesswerte ermöglicht.

Die MTA-Zuordnung gemäß der Erfindung erfordert nur eine gruppenweise, d.h. lokale Betrachtung der Sende- und Empfangsimpulsfolgen über jeweils nur wenige Impulse und kann daher mit verhältnismäßig geringem Rechenaufwand z.B. auch in Echtzeit ("online") direkt während des Messvorgangs durchgeführt werden, ebenso wie die anschließende Laufzeit- und Entfernungsberechnung.

Das verwendete Abstandsmuster kann auf verschiedene Arten bekannt sein. In einer ersten Ausführungsform kann ein völlig zufälliges Abstandsmuster verwendet werden, beispielsweise indem die Impulsabstände der aufeinanderfolgenden Sendeimpulse zufällig variiert werden, was einer PRR-Modulation mit weißem Rauschen entspricht. Die konkreten, in einer Sendeimpulsgruppe auftretenden Impulsabstände können dann unmittelbar während des Aussendens aufgezeichnet werden, so dass das Abstandsmuster für die Ähnlichkeitssuche in der Empfangsimpulsfolge bekannt ist.

Alternativ kann ein vorgespeichertes zufälliges oder pseudozufälliges Abstandsmuster vorgegeben und die Sendeimpulse können gemäß diesem Abstandsmuster ausgesandt werden, wodurch das Abstandsmuster ebenfalls bekannt ist.

Besonders geeignet sind Abstandsmuster auf Basis von Pseudo-Zufallsfolgen, wie einer m-Sequenz oder einem Barker-Code, welche vorteilhafte Eigenschaften für Korrelationsverfahren zur Ermittlung der abstandsmusterähnlichsten Empfangsimpulsgruppe aufweisen.

Wie bereits kurz angesprochen, ist das Verfahren der Erfindung für eine repetitive Anwendung im Zuge einer langen Sendeimpulsfolge, die aus einer Vielzahl aufeinanderfolgender Sendeimpulsgruppen zusammengesetzt ist, besonders nützlich und wird dazu lokal, jeweils Sendeimpulsgruppe für Sendeimpulsgruppe, abgearbeitet. Dabei wird bevorzugt für jede Sendeimpulsgruppe die Empfangsimpulsfolge nur bis zur jeweils nächstliegenden, d.h. zeitlich erstaufgefundenen abstandsmusterähnlichsten Empfangsimpulsgruppe durchsucht, und für dieses Paar von einander nächstliegenden abstandsmusterähnlichsten Sende- und Empfangsimpulsgruppen werden dann die individuellen Impulslaufzeiten ermittelt. Die so ermittelten Impulslaufzeiten ergeben - zusammengesetzt über alle aufeinanderfolgendenen Sendeimpulsgruppen - eine vollständige Folge von Impulslaufzeiten und damit Entfernungsmesswerten für die gesamte Sendeimpulsfolge, d.h. für jeden einzelnen Sendeimpuls derselben.

Da in der Praxis eine automatische Auswertung einer begrenzten Zahl von MTA-Zonen ausreicht, kann die Länge des Abstandsmusters, d.h. der Sendeimpulsgruppe, entsprechend begrenzt werden, was auch günstig ist, wenn die von der Sendeimpulsfolge abgetasteten Umgebungsziele in verschiedenen MTA-Zonen liegen. Je kürzer die zu korrelierenden Sende- und Empfangsimpulsgruppen sind, desto rascher reagiert das Verfahren auf MTA-Zonenwechsel während der Sendeimpulsfolge, und je länger die zu korrelierenden Sende- und Empfangsimpulsgruppen sind, desto störungsunanfälliger ist die automatische MTA-Zonenzuordnung. Demgemäß ist in bevorzugten Ausführungsformen der Erfindung, welche einen guten Kompromiss zwischen diesen gegensätzlichen Anforderungen liefern, die Anzahl von Impulsen in der Sendeimpulsgruppe und in der Empfangsimpulsgruppe jeweils 4 bis 64, bevorzugt 16 bis 32.

Bevorzugt erfolgt das Ermitteln der Empfangsimpulsgruppe durch Korrelieren der Sendeimpulsgruppe mit einem über die Empfangsimpulsfolge gleitenden Fenster mit der Sendeimpulsgruppenlänge und Ermitteln jener Position des gleitenden Fensters, welche das Korrelationsmaximum ergibt. Dies kann beispielsweise mittels einer für jede Sendeimpulsgruppe durchlaufenen Schleife, in der in jedem Schleifendurchlauf eine Fensterposition, d.h. eine potenzielle Empfangsimpulsgruppe, in Bezug auf ihre Abstandsmuster-Korrelation "ausprobiert" wird, erreicht werden.

Besonders günstig ist es, wenn für das Korrelieren eine hardwarenahe Lösung eingesetzt wird, indem ein an das bekannte Abstandsmuster angepasstes Filter verwendet wird, dem die Impulsabstände der Empfangsimpulsfolge als Eingangssignal zugeführt werden und dessen Ausgangssignal den Auftrittszeitpunkt der abstandsmusterähnlichsten Empfangsimpulsgruppe anzeigt. Das gesuchte Abstandsmuster ist dabei direkt als Impulsantwort eines signalangepassten ("matched") Filters implementiert, so dass ein maximales Ansprechen des Filters, ein "Peak" an seinem Ausgang, das Erkennen des Abstandsmusters in der Empfangsimpulsfolge anzeigt.

Bei dieser Ausführungsform ist es ferner besonders günstig, wenn ein weiteres an das bekannte Abstandsmuster angepasstes Filter verwendet wird, dem die Impulsabstände der Sendeimpulsfolge als Eingangssignal zugeführt werden und dessen Ausgangssignal den Auftrittszeitpunkt einer Sendeimpulsgruppe anzeigt, welcher als Zeitreferenz für das Bestimmen der Laufzeiten zwischen den Sendeimpulsen einer Sendeimpulsgruppe und den jeweiligen Empfangsimpulsen der dazu ermittelten Empfangsimpulsgruppe verwendet wird. Dadurch können die Komponenten zur Erzeugung der Sendeimpulsfolge mit den genannten Abstandsmustern einerseits und jene zur Auswertung der Empfangsimpulsfolge anderseits stärker voneinander entkoppelt werden: Das genannte weitere signalangepasste Filter extrahiert die Zeitinformation über den Beginn jeweils eines neuen Abstandsmusters und damit jeweils einer neuen Sendeimpulsgruppe direkt aus der Sendeimpulsfolge und stellt diese Zeitinformation als Referenz für die MTA-zonenrichtige Laufzeitmessung der Empfangsimpulse bereit.

Das Verfahren der Erfindung kann auch für mehrzielfähige Laserscanner eingesetzt werden, welche in der Lage sind, von mehreren, von ein und demselben Sendeimpuls getroffenen Zielen, z.B. Blattwerk eines Baums und darunterliegendem Boden, reflektierte Mehrfach-Empfangsimpulse auszuwerten und demgemäß mehrere Entfernungsmesswerte pro Sendeimpuls zu liefern. Eine für diesen Einsatz geeignete Ausführungsform der Erfindung zeichnet sich dadurch aus, dass die Empfangsimpulsfolge vor dem genannten Schritt des Ermittelns der abstandsmusterähnlichsten Empfangsimpulsgruppe um Mehrfach-Empfangsimpulse bereinigt wird, indem jeweils von mehreren innerhalb eines mittleren Sendeimpulsabstandes auftretenden Empfangsimpulsen nur ein Empfangsimpuls berücksichtigt wird und die übrigen unberücksichtigt gelassen werden. Falls gewünscht, können anschließend auch Laufzeiten und Entfernungsmesswerte für die zuvor unberücksichtigten Empfangsimpulse bestimmt werden, und zwar bezogen auf jeweils den ursächlichen Sendeimpuls, d.h. jenen Sendeimpuls, bezüglich dessen die Laufzeit eines berücksichtigten Empfangsimpulses bestimmt wurde.

Gemäß einem ersten Aspekt der Erfindung kann das Verfahren zum MTA-korrekten Entfernungsmessen eines Umgebungszieles verwendet werden, indem die Sendeimpulse fortlaufend auf ebendieses selbe Umgebungziel gerichtet werden.

Gemäß einem zweiten Aspekt der Erfindung kann das Verfahren auch zum Laserscannen eingesetzt werden, indem die Impulse der Sendeimpulsfolge Laserimpulse sind und fortlaufend auf verschiedene Umgebungsziele gerichtet werden, um eine ganze Umgebung punktweise abzutasten bzw. zu scannen. Laserimpulse lassen sich durch rotierende Spiegel od.dgl. besonders einfach auf unterschiedliche Ziele richten.

Die Erfindung wird nachstehend anhand von in den beigeschlossenen Zeichnungen dargestellten Ausführungsbeispielen näher erläutert. In den Zeichnungen zeigt:

Fig. 1 schematisch verschiedene Reflexionssituationen eines gepulsten Laserabtaststrahls an Umgebungszielen, die in verschiedenen MTA-Zonen liegen, nach dem Stand der Technik;
Fig. 2 beispielhafte Zeitdiagramme von Sende- und Empfangsimpulsen für die Reflexionssituationen von Fig. 1 nach dem Stand der Technik;
Fig. 3 beispielhafte Zeitdiagramme von Sende- und Empfangsimpulsen im Zusammenhang mit verschiedenen Schritten des Verfahrens der Erfindung;
Fig. 4 beispielhafter Abstandsmusterdiagramme verschiedener Impulsfolgen im Rahmen des Verfahrens der Erfindung;
Fig. 5 den Schritt des Bestimmens individueller Laufzeiten zwischen einzelnen Impulsen von MTA-zonenrichtig korrelierten Sende- und Empfangsimpulsgruppen gemäß dem Verfahren der Erfindung;
Fig. 6 ein Blockschaltbild eines mit Hilfe zweier Matched-Filter aufgebauten Abstandsmusterkorrelators zur Durchführung des Verfahrens der Erfindung; und
Fig. 7 beispielhafte Zeitdiagramme der Ausgangssignale der beiden Matched-Filter von Fig. 6.

Die Fig. 1 und 2 zeigen die Impulszuordnungsproblematik von MTA-zonenüberschreitenden Entfernungsmess- bzw. Scanbereichen und wurden bereits eingangs erörtert. Zur Überwindung dieses Problems dient das nun im folgenden beschriebene Verfahren, welches auf einer signalanalytischen Auswertung einer Vielzahl von Sendeimpulsen $S_1$, $S_2$, $S_3$,..., allgemein $S_k$, und Empfangsimpulsen $E_1$, $E_2$, $E_3$,..., allgemein $E_k$, beruht.

Die folgende Verfahrensbeschreibung nimmt konkret auf Laserimpulse als Sende- und Empfangsimpulse $S_k$, $E_k$ Bezug. Es versteht sich jedoch, dass die Sende- und Empfangsimpulse $S_k$, $E_k$ beliebiger Art sein können, beispielsweise Schallimpulse in einem Sonargerät, Lichtimpulse in einer Time-of-Flight-Kamera (photonic mixing device, PMD), Radarimpulse in einem Radarentfernungsmesser oder -scanner, elektrische Impulse in Leitungsmessgeräten usw. oder eben Laserimpulse in einem Laserentfernungsmesser oder -scanner. Das hier geschilderte Verfahren ist demgemäß allgemein auf beliebige Arten von Impulslaufzeit-Messverfahren anwendbar.

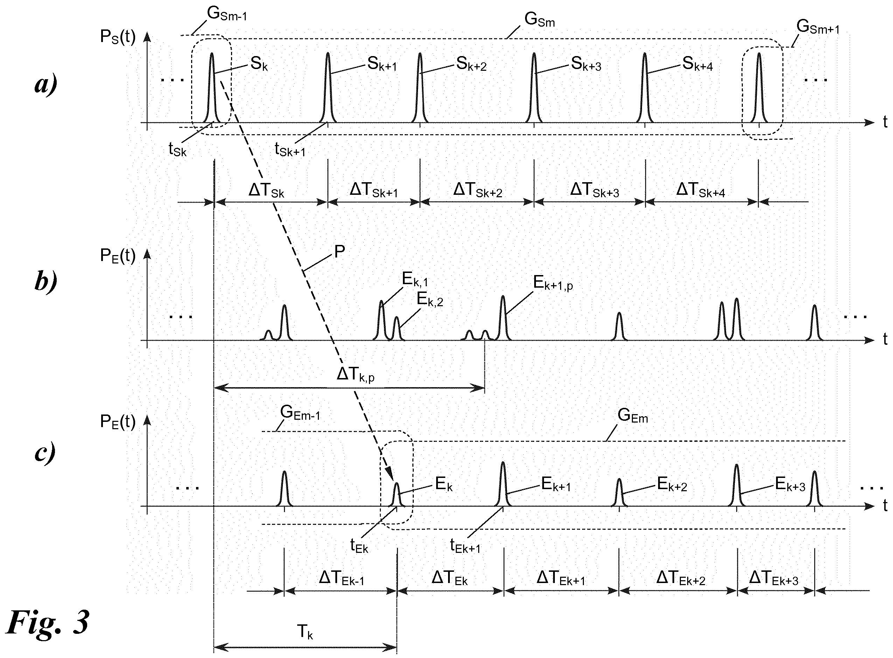

Gemäß den Fig. 3a und 3c wird eine Folge $\{S_k\}$ von Laser-Sendeimpulsen $S_k$ vom Laserentfernungsmesser bzw. -scanner 1 auf die Umgebung U (Fig. 1) ausgesandt, um durch Reflexionen der Sendeimpulse $S_k$ an Umgebungszielen $U_1$, $U_2$, ..., allgemein $U_i$, eine Folge $\{E_k\}$ von Empfangsimpulsen $E_k$ zurückzuerhalten. Aus der Laufzeit $T_k$ jedes umgebungsreflektierten Laserimpulses, d.h. der Differenz zwischen dem Empfangszeitpunkt $t_{Ek}$ des Empfangsimpulses $E_k$ und dem Sendezeitpunkt $t_{Sk}$ des zugrundeliegenden Sendeimpulses $S_k$, lässt sich in bekannter Weise die Entfernung $D_k = c \cdot T_k/2$ vom Entfernungsmesser bzw. Scanner 1 bis zum vermessenen Umgebungsziel $U_i$ berechnen. Die Laufzeiten $T_k$ und Entfernungsmesswerte $D_k$ sind einander direkt proportional und werden im Folgenden daher auch synonym und austauschbar verwendet.

Das hier beschriebene Verfahren lässt sich sowohl zum Entfernungsmessen verwenden, wenn die Sendeimpulse $S_k$ fortlaufend auf ein und dasselbe Umgebungsziel $U_i$ gerichtet werden, als auch zum Scannen, wenn die Sendeimpulse $S_k$ fortlaufend auf verschiedene Umgebungsziele $U_i$ gerichtet werden, z.B. zeilenweise abtastend über die Umgebung U geführt. In ersterem Falle werden eine Vielzahl von Entfernungsmesswerten $D_k$ ein- und desselben Umgebungsziels $U_i$ erhalten, welche anschließend - z.B. von Ausreisserwerten bereinigt - gemittelt werden können, um ein Endresultat der Entfernung D zu erhalten. Im zweiten Falle kann aus der Vielzahl von Entfernungsmesswerten $D_k$ und der im Scanner 1 bekannten Aussenderichtung der Sendeimpulse $S_k$ ein diskretes Profil bzw. Oberflächenmodell der Umgebung U (eine "Punktwolke") erstellt werden, wie dem Fachmann z.B. auf dem Gebiet des Laserscannens geläufig.

Die in den Fig. 3a und 3c gezeigte Zuordnung bzw. Paarung P zwischen Sendeimpulsen $S_k$ und Empfangsimpulsen $E_k$ geht von der Annahme aus, dass sich die Umgebungsziele $U_i$ in der zweiten MTA-Zone $Z_2$ befinden, siehe die beispielhaften Umgebungsziele $U_3$ und $U_4$ in Fig. 1. In der gezeigten Zuordnung P wird ein Empfangsimpuls $E_k$ nicht mehr dem unmittelbar vorangegangenen Sendeimpuls sondern dem vorletzten Sendeimpuls zugeordnet. Liegen die abgetasteten Umgebungsziele $U_i$ in der der Zuordnung P entsprechenden "richtigen" MTA-Zone $Z_2$, sind die auf Basis der gezeigten Laufzeiten $T_k$ berechneten Entfernungsmesswerte $D_k$ korrekt.

Im allgemeinen ist die MTA-Zone $Z_1$, $Z_2$, ..., allgemein $Z_j$, in welcher die Umgebungsziele $U_i$ liegen, nicht bekannt. Um auch in diesem Fall die richtige MTA-Zonenlage zu erkennen und dadurch die richtigen Entfernungsmesswerte $D_k$ zu ermitteln, wird das folgende Verfahren angewandt.

Wie in Fig. 3a dargestellt, werden die Sendeimpulse $S_k$ nicht mit einem konstanten Impulsabstand $\tau = \Delta T = 1/PRR$, d.h. einer konstanten Impulswiederholungsrate PRR ausgesandt, sondern mit einem von Sendeimpuls zu Sendeimpuls variierenden Impulsabstand $\Delta T_{Sk}$. Mit anderen Worten wird die Impulswiederholungsrate PRR bzw. der Impulsabstand $\Delta T$ gleichsam mit einem Signal moduliert ("pulspositionsmoduliert"), um die genannte Variation der Impulsabstände $\Delta T_{Sk}$ zu erzielen.

Die Variation des Impulsabstandes $\Delta T_{Sk}$ von Impuls $S_k$ zu Impuls $S_{k+1}$ wird anwendungsspezifisch gewählt, beispielsweise +/-1%, +/-5%, +/-10% oder +/-50% (oder mehr) um einen mittleren (durchschnittlichen) Sendeimpulsabstand $\Delta T$.

Das Modulationssignal zur Erzielung der genannten Impulsabstandsvariation kann beliebiger Art sein, z.B. ein Sinussignal, Dreiecksignal, Sägezahnsignal, Treppensignal, ein Datensignal mit eigenem Informationsgehalt oder ein statistisch zufälliges Signal wie weißes Rauschen. Mit einem solchen Zufallssignal wird die Impulswiederholungsrate $PRR_k$ bzw. der Impulsabstand $\Delta T_{Sk}$ in der Art eines zufälligen "Phasenjitters" der Sendeimpulse $S_k$ statistisch zufällig variiert. In bestimmten Grenzen kann ein solches Zufallssignal auch lediglich pseudozufällig sein, wie eine m-Sequenz oder ein Barker-Code.

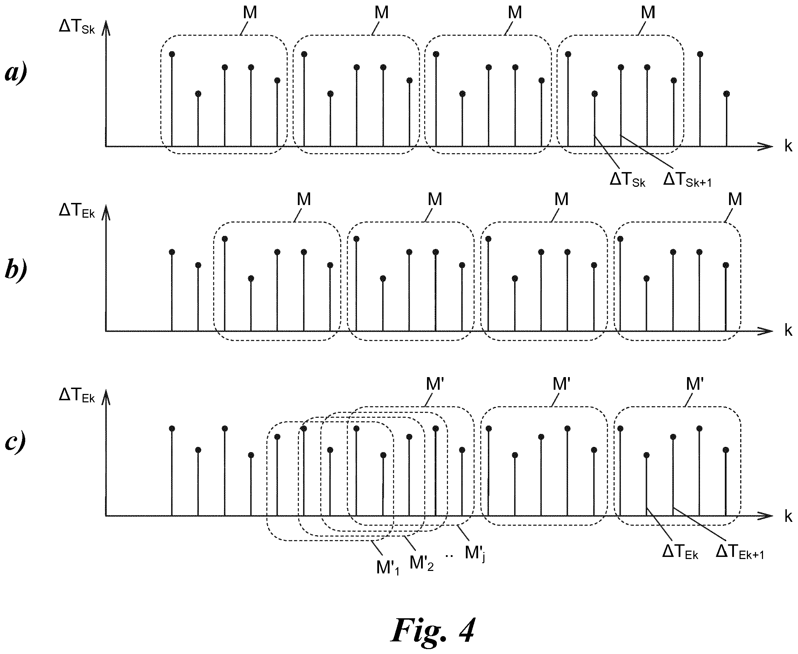

Fig. 4a zeigt eine alternative Darstellung der Sendeimpulsabstände $\Delta T_{Sk}$ der Sendeimpulsfolge $\{S_k\}$, aufgetragen als Abtastwerte in regelmäßigen Darstellungsabständen über dem Index k, d.h. in einem regelmäßigen Index-Darstellungsraster k. Die Amplitude jedes Abtastwerts der Abtastwertfolge von Fig. 4a entspricht damit jeweils einem Impulsabstand $\Delta T_{Sk}$, so dass mehrere aufeinanderfolgende Amplituden- bzw. Abtastwerte in Fig. 4a ein "Abstandsmuster" M mehrerer Sendeimpulse $S_k$ von Fig. 3a wiedergeben.

Es versteht sich, dass die Impulsabstände $\Delta T_{Sk}$ auch relativ zu dem mittleren Sendeimpulsabstand $\tau = \Delta T$ aufgetragen werden können, so dass jeder Amplituden- bzw. Abtastwert der Impulsabstands-Darstellung von Fig. 4 lediglich das Ausmaß an "Phasenjitter" jedes Sendeimpulses $S_k$ gegenüber einem exakt periodischen Aussendetakt $PRR = 1/\tau$ wiedergibt. Das Abstandsmuster M kann daher auch bloß relative Impulsabstandsdefinitionen, bezogen auf einen mittleren Sendeimpulsabstand $\tau = \Delta T$, umfassen.

In dem Beispiel der Fig. 3 und 4 wurde ein pseudozufälliges (hier: sich nach jeweils fünf Sendeimpulsen $S_k$ der Sendeimpulsfolge $\{S_k\}$ wiederholendes) Abstandsmuster M gewählt. Die Sendeimpulsfolge $\{S_k\}$ kann daher auch als Abfolge von sich jeweils im ersten bzw. letzten Sendeimpuls teilüberlappenden Sendeimpulsgruppen $G_{S1}$, $G_{S2}$, ..., allgemein $G_{Sm}$, von Sendeimpulsen $S_k$ betrachtet werden, zwischen denen jeweils Impulsabstände $\Delta T_{Sk}$ entsprechend dem Abstandsmuster M liegen.

Es ist nicht notwendig, dass jede Sendeimpulsgruppe $G_{Sm}$ dasselbe Abstandstandsmuster M zeigt, sie könnte auch jeweils ein individuelles Abstandsmuster $M_m$ haben, beispielsweise wenn die Impulsabstände $\Delta T_{Sk}$ der Sendeimpulsfolge $\{S_k\}$ mit einem nicht der Periodizität der Gruppen $G_{Sm}$ entsprechenden Modulationssignal moduliert werden, z.B. mit weißem Rauschen. Bevorzugt wird jedoch für alle Gruppen $G_{Sm}$ dasselbe Abstandsmuster M verwendet, was das Verfahren vereinfacht, die Anzahl an automatisch zuordenbaren MTA-Zonen $Z_j$ jedoch auf die Gruppen- bzw. Musterlänge beschränkt, wie später noch näher erläutert.

Ein Wiedererkennen des Abstandsmusters M bzw. $M_m$ einer Sendeimpulsgruppe $G_{Sm}$ in der Empfangsimpulsfolge $\{E_k\}$ kann nun wie folgt zur automatischen MTA-Zonenzuordnung, d.h. zum Auffinden der korrekten Paarung P, verwendet werden.

Fig. 4b zeigt zur Erläuterung eine Impulsabstandsdarstellung einer Empfangsimpulsfolge $\{E_k\}$ bei Reflexion der Sendeimpulsfolge $\{S_k\}$ an einem Ziel in einer konstanten Entfernung, beispielsweise einem Spiegel. Wie ersichtlich finden sich das Abstandsmuster M der Sendeimpulsgruppen $G_{Sm}$ in unveränderter Form, nur zeitversetzt entsprechend der richtigen MTA-Zone $Z_2$ bzw. Paarung P, in der Empfangsimpulsfolge $\{E_k\}$ wieder. Jene Empfangsimpulse $E_k$, welche also zu einer Empfangsimpulsgruppe $G_{Em}$ (Fig. 3c) gehören und das Abstandsmuster M (bzw. $M_m$) zeigen (Fig. 4b), sind demgemäß die "richtigen", auf die Sendeimpulse $S_k$ der Sendeimpulsgruppe $G_{Sm}$ zurückzuführenden Empfangsimpulse $E_k$.

Fig. 4c zeigt anstelle des theoretischen idealen Reflexionsfalls von Fig. 4b die Reflexion der Sendeimpulsfolge $\{S_k\}$ an einer realen Umgebung U, bei welcher jeder Sendeimpuls auf ein anderes Umgebungsziel $U_i$ in z.B. der zweiten MTA-Zone $Z_2$, jedoch in einer unterschiedlichen individuellen Entfernung $D_i$ trifft. Dadurch erfahren die Empfangsimpulse $E_k$ jeweils einen - entsprechend der Entfernung $D_i$ des jeweilig getroffenen Umgebungsziels $U_i$ - unterschiedlichen Zeitversatz, was dementsprechend zu einem vom Sendeimpuls-Abstandsmuster M abweichenden Empfangssignal-Abstandsmuster M', in der Darstellungsweise von Fig. 4c zu unterschiedlichen Amplituden- bzw. Abstandswerten, führt. Durch Aufsuchen bzw. Ermitteln jener Empfangsimpulsgruppe $G_{Em}$ von Empfangsimpulsen $E_k$ in der Empfangsimpulsfolge $\{E_k\}$, welche das dem Abstandsmuster M "ähnlichste" Abstandsmuster M' zeigt, kann nun wieder die zur Sendeimpulsgruppe $G_{Sm}$ gehörende Empfangsimpulsgruppe $G_{Em}$ ermittelt und damit die richtige MTA-Zonenzuordnung bzw. -paarung P ermittelt werden.

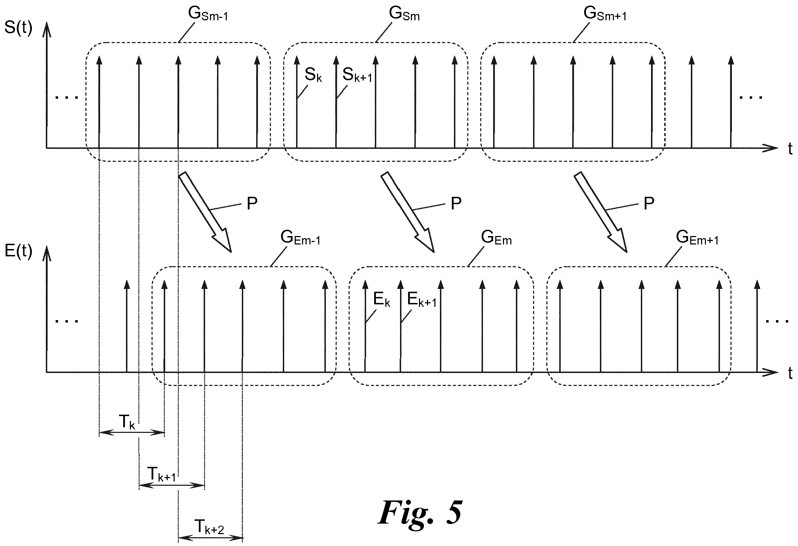

Sobald die abstandsmusterähnlichste Empfangsimpulsgruppe $G_{Em}$ in der Empfangsimpulsfolge $\{E_k\}$ (und damit die richtige Paarung P) aufgefunden worden ist, kann nun für jeden einzelnen Sendeimpuls $S_k$ der ursächlichen Sendeimpulsgruppe $G_{Sm}$ und den jeweils dieselbe Reihung in der Gruppe einnehmenden Empfangsimpuls $E_k$ der ermittelten Empfangsimpulsgruppe $G_{Em}$ - siehe die Zuordnungen erster Impuls der Gruppe $G_{Sm}$ zu erstem Impuls der Gruppe $G_{Em}$, zweiter Impuls der Gruppe $G_{Sm}$ zu zweitem Impuls der Gruppe $G_{Em}$, usw. usf. in Fig. 5 - eine individuelle Laufzeit $\Delta T_k$ zwischen dem Sendezeitpunkt $t_{Sk}$ des jeweiligen Sendeimpulses $S_k$ und dem Empfangszeitpunkt $t_{Ek}$ des Empfangsimpulses $E_k$ ermittelt werden.

Dies ist in den Fig. 3c und 5 für eine von mehreren aufeinanderfolgende Sende- und Empfangsimpulsgruppen $G_{Sm}$, $G_{Em}$ dargestellt: Wie ersichtlich können durch die Gruppenbildung und Abstandsmusteridentifizierung in den Sende- und Empfangsimpulsfolgen $\{S_k\}$, $\{E_k\}$ einerseits und die individuellen Laufzeitberechnungen $T_k$ der einzelnen Impulse in den Gruppen andererseits automatisch MTA-zonenrichtig zugeordnete, individuelle Impulslaufzeiten $T_k$ und damit Entfernungsmesswerte $D_k$ für jeden Sendeimpuls $S_k$ im Takt der Sendeimpulsfolge $\{S_k\}$ erzielt werden.

Das Auffinden der abstandsmusterähnlichsten Empfangsimpulsgruppe $G_{Em}$ für eine bestimmte Sendeimpulsgruppe $G_{Sm}$ kann auf verschiedenste Arten durchgeführt werden, beispielsweise durch Berechnen von Korrelationen zwischen potentiellen "Kandidaten"-Gruppen, die Abstandsmuster $M'_1$, $M'_2$, ..., allgemein $M'_j$, haben (siehe Fig. 4c), und jeweils dem Sendeimpuls-Abstandsmuster M, und dann Auswählen der Kandidatengruppe $M'_j$ mit dem größten Maß an Ähnlichkeit zu dem gesuchten Abstandsmuster M.

Als Ähnlichkeitsmaß zwischen zwei Abstandsmustern M und M' (bzw. $M'_j$) kann jedes in der Technik bekannte Unterschiedsmaß verwendet werden, z.B. die Standardabweichung, die Summe quadrierter Differenzen, usw.

Die Länge des Abstandsmusters M (bzw. M', $M'_j$), d.h. die Anzahl an Impulsabständen $\Delta T_{Sk}$ bzw. $\Delta T_{Ek}$ (= Anzahl an Impulsen $S_k$ bzw. $E_k$ einer Gruppe $G_{Sm}$ bzw. $G_{Em}$, minus eins), welches zur Zuordnung der Empfangsimpulsgruppen $G_{Em}$ zu den Sendeimpulsgruppen $G_{Sm}$ verwendet wird, hat Auswirkung auf die Anzahl an MTA-Zonen $Z_j$, welche automatisch aufgelöst und zugeordnet werden können: Je größer die Länge des Abstandsmusters M, desto mehr MTA-Zonen $Z_j$ können zugeordnet werden. Eine zu große Länge des Abstandsmusters M bzw. Größe der Gruppen $G_{Sm}$, $G_{Em}$ erschwert jedoch die Detektion von MTA-Zonenwechseln während einer Sendeimpulsfolge $\{S_k\}$, so dass ein Kompromiss von Vorteil ist. In praktischen Anwendungsfällen genügen 4 bis 64, bevorzugt 16 oder 32 Impulse $S_k$, $E_k$ pro Gruppe $G_{Sm}$, $G_{Em}$, d.h. Abstandsmuster M (bzw. M', $M'_j$) mit einer Länge von 3 bis 63, bevorzugt 15 bis 31 Abtastwerten.

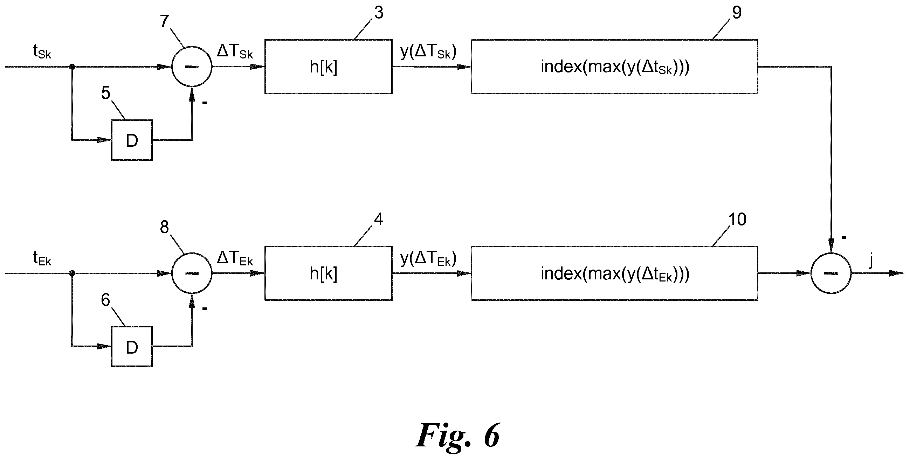

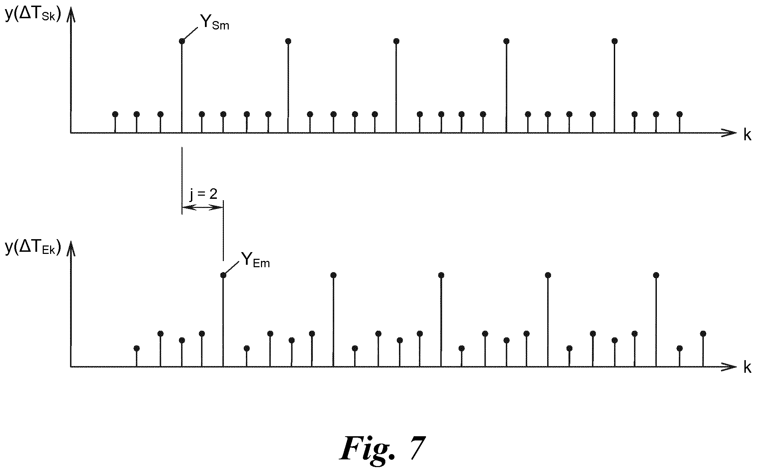

Die Fig. 6 und 7 zeigen eine praktische Ausführungsform zur Echtzeit- bzw. Online-Berechnung von Korrelationen zwischen gruppenweisen Abstandsmustern der Sende- und Empfangspulsfolgen $\{S_k\}$, $\{E_k\}$ mit Hilfe von signalangepassten ("matched") Filtern, hier Linearfiltern 3, 4. Von der Sende- und Empfangsimpulsfolgen $\{S_k\}$ und $\{E_k\}$ werden - nach entsprechender Detektion der Auftrittszeitpunkte $t_{Sk}$, $t_{Ek}$ der Impulse $S_k$, $E_k$ da-

rin - Folgen von Sende- bzw. Empfangszeitpunkten $\{t_{Sk}\}$, $\{t_{Ek}\}$ gebildet und aus diesen wiederum - durch paarweise Differenzbildung, siehe Verzögerungsglieder 5, 6 und Subtrahierer 7, 8 - Abstandsfolgen $\{\Delta T_{Sk}\}$ und $\{\Delta T_{Ek}\}$ erzeugt. Die Abstandsfolgen $\{\Delta T_{Sk}\}$, $\{\Delta T_{Ek}\}$ werden jeweils einem Matched-Filter 3 bzw. 4 zugeführt.

Jedes Filter 3, 4 besitzt eine Impulsantwort h[k], welche dem in die Sendeimpulsfolge $\{S_k\}$ eingeprägten und in der Empfangsimpulsfolge $\{E_k\}$ gesuchten Abstandsmuster M entspricht. Fig. 7 zeigt den Zeitverlauf der Signale (Abtastwerte) am Ausgang der Filter 3, 4: Das Filter 4 erzeugt jeweils dann einen Maximalwert $Y_{Sm}$ in seinem Ausgangssignal $y(\Delta T_{Sk})$, wenn in der Sendeimpulsfolge $\{S_k\}$ das eingeprägte Abstandsmuster M auftritt. Das Ausgangssignal $y(\Delta T_{Ek})$ des Filters 4 liefert jeweils dann einen Maximalwert $Y_{Em}$, wenn die maximale Korrelation (Signalanpassung) zwischen dem empfangenen Abstandsmuster M' und dem im Filter 4 als Impulsantwort h [k] eingespeicherten, gesuchten Abstandsmuster M auftritt. Aus der Zeit- bzw. Indexdifferenz j zwischen jeweils zwei hintereinander auftretenden - beispielsweise durch Maximalwertsucher 9, 10 ermittelten - Maximalwerte $Y_{Sm}$ und $Y_{Em}$ kann dann die jeweils für die aktuelle Gruppe $G_{Sm}$ bzw. $G_{Em}$ zutreffende Paarung P bzw. MTA-Zonenzuordnung (hier die MTA-Zone $Z_j$ = $Z_2$), abgelesen werden, um anschließend die Laufzeit- und Entfernungsmesswerte $T_k$ bzw. $D_k$ für die einzelnen Impulse der Gruppen berechnen zu können.

Fig. 3b zeigt einen optionalen Schritt des "Ausdünnens" der Empfangsimpulsfolge $\{E_k\}$ zur Behandlung von Mehrfach-Zielreflektionen, wie sie z.B. bei einem mehrzielfähigen Laserentfernungsmesser oder -scanner auftreten können. In diesem Fall werden für einen Sendeimpuls $S_k$ gleich zwei oder mehr Empfangsimpulse $E_{k,1}$, $E_{k,2}$, ..., allgemein $E_{k,p}$, zurückerhalten, beispielsweise weil der Sendeimpuls $S_k$ von einem luftgestützten Laserscanner durch eine Baumkrone hindurch auf den Boden trifft und sowohl vom Blattwerk des Baumes als auch vom Boden reflektiert wird. Dies ergibt zwei zeitlich knapp nebeneinander, in der Regel jedoch innerhalb einer MTA-Zone $Z_j$ liegende Empfangsimpulse $E_{k,p}$.

Zur Identifizierung der abstandsmusterähnlichsten Empfangsimpulsgruppe $G_{Em}$ wird in diesem Fall - um für den Vergleich der Sende- und Empfangsgruppen $G_{Sm}$, $G_{Em}$ wieder eine jeweils gleich große Anzahl von Impulsen darin zu erhalten - zunächst aus der Empfangsimpulsfolge $\{E_k\}$ von mehreren innerhalb eines mittleren Sendeimpulsabstandes $\tau$ auftretenden Empfangsimpulsen $E_{k,p}$ jeweils nur einer, insbesondere der erste oder letzte, Empfangsimpuls $E_{k,p}$ in der Empfangsimpulsfolge $\{E_k\}$ berücksichtigt und die übrigen bleiben vorerst unberücksichtigt, siehe Fig. 3c. Dadurch wird die Mehrzielfähigkeit des Laserentfernungsmessers bzw. -scanners zunächst auf nur ein (z.B. das erste oder letzte) Ziel in einer MTA-Zone $Z_j$ eingeschränkt, um "saubere", d.h. mit den für den Mustervergleich korrekten Impulsanzahl ausgestattete Abstandsmuster M' in der Empfangsimpulsfolge $\{E_k\}$ identifizieren und die richtige Zuordnung P ermitteln zu können. Sobald die richtige Zonenzuordnung P zwischen den Sende- und Empfangsimpulsgruppen $G_{Sm}$ und $G_{Em}$ gefunden wurde, können die zuvor unberücksichtigt gelassenen Mehrfach-Zielreflexionen $E_{k,p}$ wieder berücksichtigt und auch für diese individuelle Laufzeiten $T_{k,p}$ bezüglich des zuvor ermittelten zugeordneten Sendeimpulses $S_k$ und damit individuelle Entfernungsmesswerte $D_{k,p}$ berechnet werden, um Mehrfachziele aufzulösen.

Die Erfindung ist nicht auf die dargestellten Ausführungsformen beschränkt, sondern umfasst alle Varianten und Modifikationen, die in den Rahmen der angeschlossenen Ansprüche fallen.

**Patentansprüche**

1. Verfahren zur Entfernungsmessung von Umgebungszielen durch Laufzeitmessung von an diesen Umgebungszielen reflektierten Impulsen, insbesondere Laserimpulsen, umfassend:

   Aussenden einer Folge von Impulsen ($S_k$), in welcher die Impulsabstände ($\Delta T_{Sk}$) zumindest einer Gruppe ($G_{Sm}$) aufeinanderfolgender Impulse ($S_k$) einem bekannten Abstandsmuster (M) folgen, als Sendeimpulsfolge ($\{S_k\}$) und begleitendes Empfangen der reflektierten Impulse als Folge ($\{E_k\}$) von Empfangsimpulsen ($E_k$) und Messen deren Impulsabstände ($\Delta T_{Ek}$),
   Ermitteln, in der Empfangsimpulsfolge ($\{E_k\}$), einer Gruppe ($G_{Em}$) von Empfangsimpulsen ($E_k$), deren Impulsabstände ($\Delta T_{Ek}$) die größte Ähnlichkeit mit dem bekannten Abstandsmuster (M) haben,
   Bestimmen von Laufzeiten ($T_k$) zwischen jedem Sendeimpuls ($S_k$) der genannten Sendeimpulsgruppe ($G_{Sm}$) und jeweils jenem Empfangsimpuls ($E_k$) der genannten Empfangsimpulsgruppe ($G_{Em}$), welcher darin dieselbe Reihung in der Gruppe ($G_{Em}$) hat wie dieser Sendeimpuls ($S_k$) in seiner Gruppe ($G_{Sm}$), und
   Bestimmen von Entfernungsmesswerten ($D_k$) aus den genannten Laufzeiten ($T_k$).

2. Verfahren nach Anspruch 1, **dadurch gekennzeichnet, dass** die Impulsabstände ($\Delta T_{Sk}$) in dem genannten Abstandsmuster (M) zufällig gewählt und während des Aussendens der Sendeimpulsgruppe ($G_{Sm}$) aufgezeichnet werden.

3. Verfahren nach Anspruch 1, **dadurch gekennzeichnet, dass** die Impulsabstände ($\Delta T_{Sk}$) in dem genannten Abstandsmuster (M) gemäß einer vorgegebenen Zufalls- oder Pseudozufallsfolge gewählt werden ist.

4. Verfahren nach Anspruch 3, **dadurch gekenn-**

**zeichnet, dass** die Pseudozufallsfolge auf einer m-Sequenz oder einem Barker-Code beruht.

5. Verfahren nach einem der Ansprüche 1 bis 4, **dadurch gekennzeichnet, dass** die Sendeimpulsfolge ($\{S_k\}$) aus mehreren aufeinanderfolgenden Sendeimpulsgruppen ($G_{Sm}$) mit jeweils demselben Abstandsmuster (M) zusammengesetzt ist und die Schritte des Ermittelns der Empfangsimpulsgruppe ($G_{Em}$), Bestimmens der Laufzeiten ($T_k$) und Bestimmens der Entfernungsmesswerte ($D_k$) für jede Sendeimpulsgruppe ($G_{Sm}$) durchgeführt werden, wobei für jede Sendeimpulsgruppe ($G_{Sm}$) nur die jeweils nächstliegende Empfangsimpulsgruppen ($G_{Em}$) in der genannten Weise ermittelt wird.

6. Verfahren nach einem der Ansprüche 1 bis 5, **dadurch gekennzeichnet, dass** die Anzahl von Impulsen ($S_k$, $E_k$) in der Sendeimpulsgruppe ($G_{Sm}$) und in der Empfangsimpulsgruppe ($G_{Em}$) jeweils 4 bis 64, bevorzugt 16 bis 32 ist.

7. Verfahren nach einem der Ansprüche 1 bis 6, **dadurch gekennzeichnet, dass** das Ermitteln der Empfangsimpulsgruppe ($G_{Em}$) durch Korrelieren der Sendeimpulsgruppe ($G_{Sm}$) mit einem über die Empfangsimpulsfolge ($\{E_k\}$) gleitenden Fenster ($M'_j$) mit der Sendeimpulsgruppenlänge und Ermitteln jener Position (j) des gleitenden Fensters ($M'_j$), welche das Korrelationsmaximum ($Y_{Em}$) ergibt, erfolgt.

8. Verfahren nach einem der Ansprüche 1 bis 7, **dadurch gekennzeichnet, dass** für das Korrelieren ein an das bekannte Abstandsmuster (M) angepasstes Filter (4) verwendet wird, dem die Impulsabstände ($\Delta T_{Ek}$) der Empfangsimpulsfolge ($\{E_k\}$) als Eingangssignal zugeführt werden und dessen Ausgangssignal $Y(\Delta T_{Ek})$ den Auftrittszeitpunkt ($Y_{Em}$) der abstandsmusterähnlichsten Empfangsimpulsgruppe ($G_{Em}$) anzeigt.

9. Verfahren nach Anspruch 8, **dadurch gekennzeichnet, dass** ein weiteres an das bekannte Abstandsmuster (M) angepasstes Filter verwendet wird, dem die Impulsabstände ($\Delta T_{Sk}$) der Sendeimpulsfolge ($\{S_k\}$) als Eingangssignal zugeführt werden und dessen Ausgangssignal $Y(\Delta T_{Sk})$ den Auftrittszeitpunkt ($Y_{Sm}$) einer Sendeimpulsgruppe ($G_{Sm}$) anzeigt, welcher als Zeitreferenz für das Bestimmen der Laufzeiten ($T_k$) zwischen den Sendeimpulsen ($S_k$) einer Sendeimpulsgruppe ($G_{Sm}$) und den jeweiligen Empfangsimpulsen ($E_k$) der dazu ermittelten Empfangsimpulsgruppe ($G_{Em}$) verwendet wird.

10. Verfahren nach einem der Ansprüche 1 bis 9, **dadurch gekennzeichnet, dass** die Empfangsimpulsfolge ($\{E_k\}$) vor dem genannten Schritt des Ermittelns der abstandsmusterähnlichsten Empfangsimpulsgruppe ($G_{Em}$) um Mehrfach-Empfangsimpulse ($E_{k,j}$) bereinigt wird, indem jeweils von mehreren innerhalb eines mittleren Sendeimpulsabstandes ($\Delta T$) auftretenden Empfangsimpulsen ($E_{k,j}$) nur ein Empfangsimpuls ($E_k$) berücksichtigt wird und die übrigen unberücksichtigt gelassen werden.

11. Verfahren nach Anspruch 10, **dadurch gekennzeichnet, dass** nach dem genannten Schritt des Ermittelns der abstandsmusterähnlichsten Empfangsimpulsgruppe ($G_{Em}$) auch Laufzeiten ($T_{k,p}$) und Entfernungsmesswerte ($D_{k,p}$) für die zuvor unberücksichtigten Empfangsimpulse bezüglich jenes Sendeimpulses ($S_k$) bestimmt werden, zu dem die Laufzeit ($T_k$) des jeweils berücksichtigten Empfangsimpulses ($E_k$) bestimmt wurde.

12. Verfahren nach einem der Ansprüche 1 bis 10 zum Laserscannen, **dadurch gekennzeichnet, dass** die Impulse ($S_k$) der Sendeimpulsfolge ($\{S_k\}$) Laserimpulse sind und fortlaufend auf verschiedene Umgebungsziele ($U_i$) gerichtet werden.

**Claims**

1. A method for measuring distances of targets by measuring the time of flight of pulses, in particular laser pulses, reflected on those targets, comprising:

   transmitting a series of pulses ($S_k$), in which the pulse intervals ($\Delta T_{Sk}$) of at least a group ($G_{Sm}$) of successive pulses ($S_k$) follow a known interval pattern (M), as a transmit pulse series ($\{S_k\}$), and simultaneously receiving the reflected pulses as a series ($\{E_k\}$) of receive pulses ($E_k$) and measuring their pulse intervals ($\Delta T_{Ek}$), determining, in the receive pulse series ($\{E_k\}$), a group ($G_{Em}$) of receive pulses ($E_k$), whose pulse intervals ($\Delta T_{Ek}$) have the closest similarity with the known interval pattern (M), determining times of flight ($T_k$) between each transmit pulse ($S_k$) of said transmit pulse group ($G_{Sm}$) and respectively that receive pulse ($E_k$) of said receive pulse group ($G_{Em}$) that has the same order in the group ($G_{Em}$) as this transmit pulse ($S_k$) in his group ($G_{Sm}$), and determining distance measuring values ($D_k$) from said times of flight ($T_k$).

2. The method according to claim 1, **characterized in that** the pulse intervals ($\Delta T_{Sk}$) in said interval pattern (M) are chosen at random and are recorded during transmitting the transmit pulse group ($G_{Sm}$).

3. The method according to claim 1, **characterized in that** the pulse intervals ($\Delta T_{Sk}$) in said interval pattern (M) are chosen in a predetermined random or pseudo random sequence.

4. The method according to claim 3, **characterized in that** the pseudo random sequence is based on an m-sequence or on a Barker code.

5. The method according to any one of the claims 1 to 4, **characterized in that** the transmit pulse series ($\{S_k\}$) is made up of a plurality of sequential transmit pulse groups ($G_{Sm}$), each having the same interval pattern (M), and the steps of determining the receive pulse group ($G_{Em}$), determining the times of flight ($T_k$), and determining the distance measurement values ($D_k$) are performed for each transmit pulse group ($G_{Sm}$), wherein for each transmit pulse group ($G_{Sm}$) only the closest receive pulse group ($G_{Em}$) is determined in said manner.

6. The method according to any one of the claims 1 to 5, **characterized in that** the number of pulses ($S_k$, $E_k$) in the transmit pulse group ($G_{Sm}$) and in the receive pulse group ($G_{Em}$) is each 4 to 64, preferably 16 to 32.

7. The method according to any one of the claims 1 to 6, **characterized in that** the determining of the receive pulse group ($G_{Em}$) is performed by correlating the transmit pulse group ($G_{Sm}$) with a window ($M'_j$) moving over the receive pulse series ($\{E_k\}$), the window having the length of the transmit pulse group, and determining this position (j) of the moving window ($M'_j$) that yields the correlation maximum ($Y_{Em}$).

8. The method according to any one of the claims 1 to 7, **characterized in that** for the correlating a filter (4) matched to the known interval pattern (M) is used, to which filter the pulse intervals ($\Delta T_{Ek}$) of the receive pulse series ($\{E_k\}$) are fed as an input signal and the output signal $Y(\Delta T_{Ek})$ of which indicates the time of occurrence ($Y_{Em}$) of the receive pulse group ($G_{Em}$) most closely matching the interval pattern.

9. The method according to claim 8, **characterized in that** a further filter matched to the known interval pattern (M) is used, to which further filter the pulse intervals ($\Delta T_{Sk}$) of the transmit pulse series ($\{S_k\}$) are fed as an input signal and the output signal $Y(\Delta T_{Sk})$ of which indicates the time of occurrence ($Y_{Sm}$) of a transmit pulse group ($G_{Sm}$), which is used as a time reference for the determining of the times of flight ($T_k$) between the transmit pulses ($S_k$) of a transmit pulse group ($G_{Sm}$) and the respective receive pulses ($E_k$) of the receive pulse group ($G_{Em}$) determined thereto.

10. The method according to any one of the claims 1 to 9, **characterized in that** before said step of determining of the receive pulse group ($G_{Em}$) most closely matching the interval pattern the receive pulse series ($\{E_k\}$) is corrected for multi-receive pulses ($E_{k,j}$) by considering only one receive pulse ($E_k$) of multiple receive pulses ($E_{k,j}$) occurring within an average transmit pulse interval ($\Delta T$) and disregarding the remaining ones.

11. The method according to claim 10, **characterized in that** after said step of determining of the receive pulse group ($G_{Em}$) most closely matching the interval pattern also times of flight ($T_{k,p}$) and distance measurement values ($D_{k,p}$) are determined for the previously disregarded receive pulses with respect to that transmit pulse ($S_k$) for which the time of flight ($T_k$) of the respective considered receive pulse ($E_k$) was determined.

12. The method according to any one of the claims 1 to 10 for laser scanning, **characterized in that** the pulses ($S_k$) of the transmit pulse series ($\{S_k\}$) are laser pulses and are continuously directed onto different targets ($U_i$).

**Revendications**

1. Procédé de mesure de distances par rapport à des cibles environnantes par une mesure du temps de transit d'impulsions réfléchies sur ces cibles environnantes, notamment d'impulsions laser, comprenant :

   l'émission d'une suite d'impulsions ($S_k$), dans laquelle les intervalles d'impulsions ($\Delta T_{Sk}$) d'au moins un groupe ($G_{Sm}$) d'impulsions ($S_k$) successives correspondent à un motif d'intervalles (M), sous la forme d'une suite d'impulsions d'émission ($\{S_k\}$), et la réception simultanément d'impulsions réfléchies, sous la forme d'une suite ($\{E_k\}$) d'impulsions de réception ($E_k$), et la mesure de leurs intervalles d'impulsions ($\Delta T_{ek}$),
   la détermination, dans la suite des impulsions de réception ($\{E_k\}$), d'un groupe ($G_{Em}$) d'impulsions de réception ($E_k$), dont les intervalles d'impulsions ($\Delta T_{ek}$) ont la ressemblance la plus grande avec le motif d'intervalles (M) connu,
   la détermination du temps de transit ($T_k$) entre chaque impulsion d'émission ($S_k$) dudit groupe d'impulsions d'émission ($G_{Sm}$) et cette impulsion de réception ($E_k$) dudit groupe d'impulsions de réception ($G_{Em}$), laquelle a le même rang dans le groupe ($G_{Em}$) que cette impulsion d'émission ($S_k$) dans son groupe ($G_{Sm}$), et
   la détermination de valeurs de mesure de distance ($D_k$) à partir desdits temps de transit ($T_k$).

2. Procédé selon la revendication 1, **caractérisé en ce**

**que** les intervalles d'impulsions ($\Delta T_{Sk}$) sont choisis au hasard dans ledit motif d'intervalles (M) et sont enregistrés pendant l'émission du groupe d'impulsions d'émission ($G_{Sm}$).

3. Procédé selon la revendication 1, **caractérisé en ce que** les intervalles d'impulsions ($\Delta T_{Sk}$) sont choisis dans ledit motif d'intervalles (M) selon une suite aléatoire prédéfinie ou une suite pseudo-aléatoire prédéfinie.

4. Procédé selon la revendication 3, **caractérisé en ce que** la suite pseudo-aléatoire repose sur une séquence-m ou un code de Barker.

5. Procédé selon l'une des revendications 1 à 4, **caractérisé en ce que** la suite d'impulsions d'émission ($\{S_k\}$) est composée de plusieurs groupes d'impulsions d'émission ($G_{Sm}$) successifs avec chaque fois le même motif d'intervalles (M), et les étapes de détermination du groupe d'impulsions de réception ($G_{Em}$), de détermination des temps de transit ($T_k$) et de détermination des valeurs de mesure de distance ($D_k$) sont exécutées pour chaque groupe d'impulsions d'émission ($G_{Sm}$), où, pour chaque groupe d'impulsions d'émission ($G_{Sm}$), uniquement les groupes d'impulsions de réception ($G_{Em}$) les plus proches sont évalués dans ladite manière.

6. Procédé selon l'une des revendications 1 à 5, **caractérisé en ce que** le nombre d'impulsions ($S_k$, $E_k$) dans le groupe d'impulsions d'émission ($G_{Sm}$) et dans le groupe d'impulsions de réception ($G_{Em}$) est respectivement de 4 á 64, de préférence, de 16 á 32.

7. Procédé selon l'une des revendications 1 à 6, **caractérisé en ce que** la détermination du groupe d'impulsions de réception ($G_{Em}$) est effectuée par une corrélation du groupe d'impulsions d'émission ($G_{Sm}$) avec une fenêtre ($M'_j$) ayant la longueur de groupe d'impulsions d'émission, le fenêtre ($M'_j$) glissante à travers la suite d'impulsions de réception ($\{E_k\}$), et par la détermination de la position (j) de la fenêtre glissante ($M'_j$), laquelle donne le maximum de corrélation ($Y_{Em}$).

8. Procédé selon l'une des revendications 1 à 7, **caractérisé en ce que**, pour la corrélation, un filtre (4) adapté au motif d'intervalles (M) connu est employé, vers lequel filtre les intervalles d'impulsions ($\Delta T_{Ek}$) de la suite d'impulsions de réception ($\{E_k\}$) sont transférés sous la forme d'un signal d'entrée et dont le signal de sortie $Y(\Delta T_{Ek})$ indique l'instant d'apparition ($Y_{Em}$) du groupe d'impulsions de réception ($G_{Em}$) le plus ressemblant au motif d'intervalles.

9. Procédé selon la revendication 8, **caractérisé en ce qu'**un autre filtre adapté au motif d'intervalles (M) connu est employé, vers lequel autre filtre les intervalles d'impulsions ($\Delta T_{Sk}$) de la suite d'impulsions d'émission ($\{S_k\}$) sont transférés sous la forme d'un signal d'entrée et dont le signal de sortie $Y$ ($\Delta T_{Sk}$) indique l'instant d'apparition ($Y_{Sm}$) d'un groupe d'impulsions d'émission ($G_{Sm}$), lequel est employé en tant que référence temporelle pour la détermination des temps de transit ($T_k$) entre les impulsions d'émission ($S_k$) d'un groupe d'impulsions d'émission ($G_{Sm}$) et les impulsions de réception ($E_k$) correspondantes du groupe d'impulsions de réception ($G_{Em}$) évalué pour celles-ci.

10. Procédé selon l'une des revendications 1 à 9, **caractérisé en ce que** la suite d'impulsions de réception ($\{E_k\}$) est épurée des impulsions de réception multiples ($E_{k,j}$) avant l'étape de détermination du groupe d'impulsions de réception ($G_{Em}$) le plus ressemblant au motif d'intervalles, **en ce que**, parmi multiples impulsions de réception ($E_{k,j}$) se produisant dans un intervalle d'impulsion d'émission ($\Delta T$) moyen, on ne tient compte que d'une impulsion de réception ($E_k$) et les restantes sont négligées.

11. Procédé selon la revendication 10, **caractérisé en ce qu'**après ladite étape de détermination du groupe d'impulsions de réception ($G_{Em}$) le plus ressemblant au motif d'intervalles, aussi des temps de transit ($T_{k,p}$) et des valeurs de mesure des distances ($D_{k,p}$) sont déterminées pour les impulsions de réception négligées précédemment relatif a cette impulsion d'émission ($S_k$) pour laquelle le temps de transit ($T_k$) de l'impulsion de réception ($E_k$) dont on a respectivement tenu compte a été déterminé.

12. Procédé selon l'une des revendications 1 à 10 pour un balayage laser, **caractérisé en ce que** les impulsions ($S_k$) de la suite des impulsions d'émission ($\{S_k\}$) sont des impulsions laser et sont continuellement orientées vers diverses cibles environnantes ($U_i$).

**Fig. 1**
(Stand der Technik)

**Fig. 2**
(Stand der Technik)

EP 2 889 642 B1

*Fig. 3*

*Fig. 4*

*Fig. 5*

*Fig. 6*

EP 2 889 642 B1

*Fig. 7*

EP 2 889 642 B1